Europäisches Patentamt

European Patent Office

Office européen des brevets

(11) Publication number : **0 506 286 A2**

(12) **EUROPEAN PATENT APPLICATION**

(21) Application number : 92302307.1

(51) Int. Cl.⁵ : **H01B 3/44**

(22) Date of filing : 18.03.92

(30) Priority : 27.03.91 US 675784

(43) Date of publication of application :
30.09.92 Bulletin 92/40

(84) Designated Contracting States :
DE FR GB

(71) Applicant : AMERICAN TELEPHONE AND
TELEGRAPH COMPANY
550 Madison Avenue
New York, NY 10022 (US)

(72) Inventor : Marx III, Morris Frederick
4732 Olde Village Lane
Dunwoody, Georgia 30338 (US)
Inventor : Moore, Warren Freeman
Apt. D-18, 4732 S. 94 Plaza
Omaha, Nebraska 68127 (US)
Inventor : Mottine, John Joseph, Jr.
15692 Jackson Drive
Omaha, Nebraska 68118 (US)
Inventor : Shepherd, Lloyd
61 Samson Avenue
Madison, New Jersey 07940 (US)

(74) Representative : Johnston, Kenneth Graham et
al
AT&T (UK) LTD. AT&T Intellectual Property
Division 5 Mornington Road
Woodford Green Essex, IG8 OTU (GB)

(54) Transmission media covered with lead-free stabilized polyvinyl chloride composition.

(57)    A cable (20) which may be used for communications, for example, include transmission media (24-24), each having a plastic composition of matter disposed thereabout. In those cables in which the transmission media are metallic conductors, an insulation (26)comprising a polyvinyl chloride composition includes a lubricant and a lead-free stabilization system. The stabilization system includes an organotin constituent in combination with a calcium-zinc constituent which provides a sacrificial function to prevent the formation of tin chloride which would affect adversely the electrical properties of the insulated conductor. A jacket (28) typically is disposed about a plurality of the transmission media and comprises a non-lead stabilized plastic composition of matter.

EP 0 506 286 A2

Jouve, 18, rue Saint-Denis, 75001 PARIS

## Technical Field

This invention relates to to transmission media covered with a lead-free stabilized polyvinyl chloride composition of matter.

## Background of the Invention

Polyvinyl chloride (PVC) is used widely in consumer and industrial products. In the communications products industry, for example, PVC is used for conductor insulation and cable jackets. Because PVC is unstable when exposed to heat and light, stabilizing additives must be added to the PVC. Typically, lead-based stabilizers are employed as antidegradants in PVC compositions for wire and cable use. Generally, organic phthalate-, stearate- and inorganic sulfate, phosphite-, or carbonate lead derivatives comprise about 2 to 5 weight percent of the PVC compositions.

In practice, it has been found that these lead stabilizers confer both long term and process stability to the PVC materials. Additionally, the resulting PVC insulating and jacketing materials exhibit desirable electrical and mechanical properties.

Recently, however, there has been interest in replacing lead stabilizers in PVC lead compositions with alternative stabilizers. This interest is driven by concerns about the toxicity of the lead derivatives, the cost for disposal of hazardous plastic waste containing them, and the possibility of future legislation banning the use of lead and other heavy metals. See, for example "Heat Stabilizers: With Cadmium and Lead Drawing Fire, Suppliers Seek Alternatives", Modern Plastics, September 1990, pp. 92-99.

Although alternative stabilizer systems for PVC are known in the art, there are no reports of widely accepted alternatives to lead-based stabilizers for flexible wire and cable products, specifically, or for other applications in which the electrical properties of the PVC materials are of paramount importance. In these applications, lead-based stabilizers are the outstanding performers in conferring stability to the molecular structure of the PVC during processing. Major chemical alterations of the PVC structure, which adversely affect its electrical properties, are thereby prevented. Further, lead-based stabilizers and their reaction products with hydrogen chloride are nonconductive and non-hydrolyzable. If they were otherwise, the electrical properties of the insulated conductor would be affected adversely.

For disclosure of a lead-free stabilizer, reference is made to section 4-3 of the 1983 second edition of "Plastics Additive Handbook" edited by R. Gachter and H. Muller. Therein, it is described that organotin mercaptides need to be considered important in the further development of PVC technology. Tin stabilizers have been recommended for PVC processing where very good thermal stability is required, such as in processing rigid PVC. That formulations which contain both organotin mercaptides and cadmium or lead-containing stabilizers or pigments may discolor because of the formation of cadmium or lead sulfide is also reported. The mercaptan odor of organotin stabilizers is characteristic and objectionable but, with flexible PVC, the odor is not observed in finished articles in general because such low concentrations are required. However because of the formation of tin chloride during extrusion of the PVC composition onto a moving metallic conductor, for example, organotin constituents usually detract from the electrical properties of the insulated conductor.

What is sought after and what seemingly is not available in the art are compositions of matter which may be used to cover transmission media such as insulation or jacketing, for example; and which include lead-free stabilizer systems. Sought after as replacements for lead stabilizers are additives which are capable of being employed in PVC materials, of exhibiting lower toxicity and adequate stability, and such that desirable electrical properties are not adversely affected. Also, the reaction products of the sought after non-lead stabilization system should be substantially non-conductive and non-hydrolyzable.

## Summary of the Invention

The foregoing problems of the prior art have been overcome with the transmission media of this invention as set forth in claims 1.

The PVC compositions of the transmission media of this invention exhibit excellent processing characteristics and stability during extrusion as insulation onto metallic wire such as, for example, copper and/or as jacketing on a cable core as well as over coated optical fiber. Additionally, mechanical and electrical properties of the resulting PVC cable constructions are excellent in comparison with those obtained from test results on lead-stabilized materials, the present industry standard.

These results are surprising and have led to two conclusions regarding the synergism exhibited by the lubricant stabilizer compositions. First, the observation of desirable mechanical and electrical properties in the stabilized PVC compositions implies the absence of degraded PVC molecular structures and conductive metal salts such as, for example, $ZnCl_2$, $CaCl_2$, $SnCl_2$ or $SnCl_4$ formed by reaction with hydrogen chloride. This conclusion mitigates concerns about the formation of water soluble metal salts upon processing which might leach out into water upon disposal of the PVC plastic material in landfills. Second, because the mechanism of stabilizer activity does not involve, in major part, scavenging of hydrogen chloride released from degraded PVC compositions, it is believed that the stabilizer system of the transmission media of this invention operates by an unexpectedly powerful inhibitory action against the initiation of degradation reactions in the PVC material. It should be pointed out, however, that this result also may be rationalized as a result of reduced processing temperatures that are attainable because of the lubricant portion of the new stabilizer system. At lower processing temperatures, thermal cleavage of the carbon-chloride bond in PVC with subsequent expulsion of hydrogen chloride may be reduced or eliminated.

## Brief Description of the Drawing

FIG. 1 is a perspective view of a communications cable which includes insulation and jacketing of this invention; and
FIG. 2 is an end sectional view of the cable of FIG. 1 with spacing among pairs of transmission media being exaggerated.

## Detailed Description

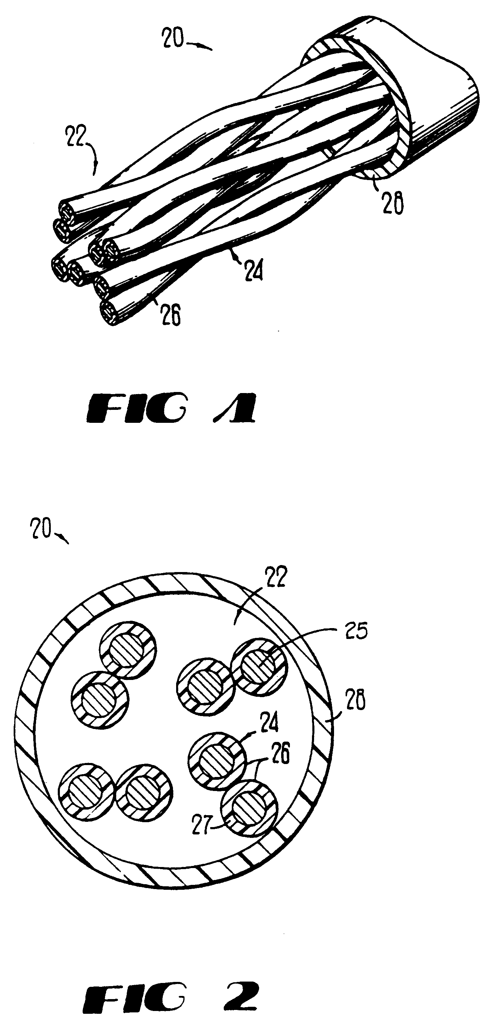

Referring now to FIGS. 1 and 2 there is shown a communications cable which is designated generally by the numeral 20. The cable 20 includes a plurality of transmission media such as for example, a plurality of pairs 22-22 of insulated conductors 24-24. Each of the conductors 24-24 includes a metallic conductor 25 and a layer 26 of an insulation material disposed thereabout.

The insulation material of the layer 26 comprises a polyvinyl chloride (PVC) composition of matter. The PVC polymers useful in this invention include not only homopolymers of vinyl chloride but also copolymers containing up to 20 percent, preferably up to 10 percent, by weight of comonomers such as propylene and/or copolymers such as polyvinyl acetate. Polymer and resin are used synonymously for purposes of this disclosure. Where the PVC composition is to be used in transmission media, it is desirable in general that it have certain electrical characteristics. For typical applications, a PVC composition is chosen which falls within the GP4-00005 to GP7-00005 (inclusive) classification promulgated in A.S.T.M. Standard D1755-88 (Reapproved 1987).

Typically, pellets of the PVC composition are fed into an extruder (not shown). Therein, the pellets are heated and form a melt which is moved through the extruder barrel to a crosshead. A die in the crosshead is effective to cause extrudate comprising the PVC composition of matter to be applied to successive increments of length of a metallic conductor which are advanced through the crosshead.

As the PVC composition is moved through the extruder, it is subjected to relatively high temperatures. When subjected to such temperatures, the PVC composition tends to degrade. In order to obtain the advantageous properties of processing and long term stability while maintaining the other desirable attributes of the PVC composition, the composition must be provided with a suitable stabilizer system. Unless this system is carefully formulated, the PVC composition exhibits processing and stability difficulties. As mentioned hereinbefore, a suitable stabilizer system has included, in the past, a lead constituent.

The conventional lead stabilized PVC composition of the prior art has been replaced with a synergistic mixture comprising a base resin, a lubricant, a bimetallic sacrificial constituent and an organotin constituent. Included in the preferred composition is a PVC resin in an amount of 100 parts by weight of resin (PHR). The PVC resin is disclosed hereinbefore.

The PVC insulation composition is stabilized by a system which includes an organotin constituent in the range of about 0.5 to 5 PHR. If less than 0.5 PHR of the organotin constituent is used, then the stabilization system is not sufficiently effective. On the upper end of the range, more than 5 PHR unjustifiably increases the cost. In the preferred embodiment, the stabilization system comprises about 1.5 PHR of Stanclere T-186 which is marketed by the AKZO Chemical Company and which is a dibutyltin mercaptopropionate.

As background, it should be noted that organotin compounds are carbon-tin bonded molecules which, unlike metal salts of carboxylic acids, for example, are true organometallics. The tin atom of such compounds is tetravalent, but mono- and di- substituted organotins have preferred stabilization properties.

Several mono- and di-organotin stabilizers were evaluated in plastic compositions and compared to a composition which included a lead stabilizer. This initial analysis included those parameters, such as, for example, volume resistivity, dielectric constant and process stability, in which a non-lead stabilizer might have the highest potential to fail. See Table 1

## TABLE I

### EXAMPLE TIN STABILIZED PVC COMPOSITIONS

| Stabilizer Type | Volume Resistivity (ohm-cm) | Dielectric Constant | Process Stability(min.) |
|---|---|---|---|
| Control (Leaded) | $2.0 \times 10^{15}$ | 3.69 | 24 |
| Lead-Free (Plus Synergistic Lubricants) | | | |
| Di-organotin Maleate (Solid Maleate) | $1.3 \times 10^{13}$ | 3.81 | 27 |
| Di-organotin Maleate (Liquid Maleate with Medium Molecular Weight Ester Ligand) | $1.5 \times 10^{13}$ | 3.82 | 25 |
| Di-Organotin Maleate (Liquid Maleate with High Molecular Weight Ester Ligand) | $1.3 \times 10^{13}$ | 3.96 | 23 |
| Di-organotin Maleate (Liquid Maleate with High Molecular Weight to Low Molecular Weight Ester Ligand Mixture) | $1.4 \times 10^{13}$ | 3.88 | 22 |
| Mono - Di-organotin Liquid Maleate Mixture | $9.2 \times 10^{12}$ | 3.96 | 26 |
| Mono-organotin Liquid Maleate with High Molecular Weight Ester Ligand) | $4.9 \times 10^{12}$ | 3.95 | 21 |
| Di-organotin mercaptide Solid Mercaptide with High Molecular Weight Ester Ligand | $2.4 \times 10^{13}$ | 3.81 | 39 |
| Di-organotin mercaptide plus sacrificial metal (Ca Zn type) | $8.5 \times 10^{13}$ | 3.78 | 51 |

The organotins selected were of the maleate and mercaptide type and varied in chemical structure to determine which organotin constituent best satisfied the desired electrical and process properties.

Table 1 compares various organotin compositions of embodiments of this invention with a lead-stabilized control composition preferred. Preferred requirements are that a suitable composition be characterised by a volume resistivity in excess of $10^{11}$ ohm-cm, a dielectric constant less than 4 and a dynamic thermal processing stability in excess of 18 minutes. The last mentioned composition in TABLE I is preferred.

As will be recalled, prior art stabilization systems typically included lead which reacts to form lead chloride when the polymer is degraded. Lead chloride advantageously is non-conductive and non-hydrolytic, but disadvantageously is not biodegradable and has an undesirable toxicity attribute. Although the tin constituent of the stabilizer system of the insulation composition of the embodiment is biodegradable, it also is both hydrolyzable and conductive.

In order to protect the tin constituent and prevent the formation of tin chloride during the extrusion process,

4

a sacrificial constituent is included. The sacrificial constituent protects the metal during compounding and extrusion and protects the tin against the undesirable formation of tin chloride. Bimetallic PVC stabilizer compositions are preferred and have demonstrated satisfactory performance as such in the range of about 0.2 to 10 PHR. In the preferred embodiment, 1 PHR of a calcium-zinc constituent is used in combination with the tin constituent. See U.S. 4,584,241. For the calcium-zinc constituent, more than 10 PHR adds unduly to the cost without proportionate return on effectiveness of the saccrifical nature of the constituent. Calcium-zinc stabilizers the described by Marcel Dekker, *Encyclopedia of PVC*, 1, edited by L. I Nass (1976), pages 311-313, and are typically in the form of the calcium or zinc stearate, although other salts such as those formed from benzoates and carboxylates, are useful.

The important considerations in formulating the calcium-zinc mixture are (1) the ratio between the calcium and zinc and (2) the percentage of calcium and zinc relative to the total weight of the PVC compound. Typically, it is desirable for the total weight percent of calcium and zinc in the calcium-zinc mixture to be between about 0.8 and 3 weight percent. This is equivalent to about 1.7 to 6.5 PHR. Weight percentages larger than 3 percent generally cause plate-out of additives onto extruder surfaces. With less than 0.8 percent, the PVC polymer becomes dynamically unstable, that is, the PVC polymer upon processing undergoes degradation. Typically, the heat stability should be greater than 15 minutes in a Brabender Plasti-Corder Torque Rheometer (oil heated) with a No. 5 roller head operating at 100 rpm rotor speed and 205 ° C. bowl temperature. The weight ratio between the calcium and the zinc present in the PVC composition should be in the range of about 1:1 to 1:4.5. Ratios lower than about 1:1 cause poor dynamic heat stability and color stability while ratios higher than about 1:4.5 cause plate-out. An example of a suitable calcium-zinc system is Therm-Chek 6164W which is manufactured by the Ferro Chemical Company and which is a calcium-zinc stearate blend having a ratio of calcium to zinc of 1:1.03.

The use of the organotin stabilization system provides surprising results. Typically, tin stabilizers are used in the manufacture of rigid products such as, for example, vinyl siding. Further, the insulation composition of this invention includes a stabilization system comprising two constituents, whereas it has been typical in the art to use one or the other. The result of excellent electrical properties in the insulation is surprising because the expected formation of tin chloride would affect adversely the electrical properties of the insulation.

The combination of the organotin and the calcium-zinc constituents is sufficient to impart the desired thermal stability to the PVC composition. Long-term and processing stability, however, are not the only properties which must be controlled for effective use of a PVC composition. Typically, it is desirable that additives be introduced into the PVC to modify other characteristics. For example, it is desirable that the PVC composition be flame retardant, be amenable to expeditious processing, be stable in humid conditions, maintains heat and color stability over time, and possess desirable mechanical and electrical properties. Thus, polymers such as PVC must be blended not only with stabilizers but also with many additives to produce all of the desired properties. Each additional additive may substantially augment the price of the composition. Also, it is not uncommon for an additive to enhance one property but to degrade a second property or detract from the efficacy of other additives. The stabilizer system of the insulation composition of the transmission media of this invention is compatible with a wide range of aforementioned additives used in the PVC insulation composition.

Included in the composition of the insulation is a lubricant system. The synergistic mixture of the preferred insulation composition of the transmission media preferably includes oleic acid-based ester lubricants. A system which includes a complex ester of oleic acid and a diglycerol ester of oleic acid is preferred. The preferred lubricant system includes about 0.5 to 5 parts by weight of a diglycerol ester of oleic acid and about 0.25 to 2.5 parts by weight of a complex ester of oleic acid. More particularly, the lubricant system includes about 2.5 PHR of LOXIOL® G-16 internal lubricant and about 0.75 PHR of LOXIOL® G-71 external lubricant provides suitable lubricity. The lubricant constituents are provided by The Henkel Group of Dusseldorf, Germany. LOXIOL G-16 lubricant comprises a glycerol ester of unsaturated fatty acid whereas LOXIOL G-71 lubricant comprises a complex ester from unsaturated fatty acids.

A complex ester of oleic acid is an ester that could be formed by the hypothetical reaction of oleic acid with a branched chain alcohol. This definition does not preclude complex esters formed by a reaction other than alcohol-acid esterified or which cannot be formed by such reaction provided the ester can be postulated as the product of such a reaction. Typical advantageous complex esters of oleic acid contain 28 to 32 carbon atoms. Combinations of complex oleic acid esters are also useful. For example, a pentaerythritol-adipate-oleate, e.g. the aforementioned LOXIOL G-71 lubricant manufactured by Henkel is quite useful. The complex ester of oleic acid should be utilized in a weight percentage of from about 0.2 to 2.0 percent of the PVC composition including additives which is equivalent to 0.25 to 2.5 PHR. Preferably, the complex ester of oleic acid is utilized in a weight percentage 0.2 to 0.75 of the total weight of the PVC polymer with its associated additives. If less than 0.2 percent is utilized, an excessive shear heat causes degradation of the PVC polymer. Typically, if greater than 2.0 percent of complex ester is utilized, excessive slippage in processing of the composition results. Slippage, in turn, causes surging of the composition through the processing equipment and irregularities in the product from flow instability. Additionally, for percentages higher than 2.0, additives tend to plate-out onto the surfaces of the compounding and processing equipment. This adversely affects the appearance and physical characteristics of the finished product.

The diglycerol ester or combination of esters of oleic acid used in conjunction with the complex ester(s) of oleic acid (LOXIOL G-71 lubricant) is preferably an ester having 14 to 18 carbon atoms, e.g., LOXIOL G-16 lubricant manufactured by Henkel, Inc.. The diglycerol ester, i.e., an ester of 2-3,bis-hydroxymethylbutane-1-2-3-4-tetrol, is advantageously utilized in a weight percentage to total weight of the PVC compound of from about 0.3 to 4.0 percent by weight, which is equivalent to about 0.5 to 5.0 PHR. Weight percentages below 0.3 percent lead to heat buildup in the PVC composition during processing with associated degradation of the PVC polymer. Weight percentages greater than 4.0 percent retard mixing and incorporation of additives into the PVC polymer material and causes excessive slippage resulting in flow- instability during processing. Additionally, levels higher than 4.0 percent generally lead to plate-out during processing.

Other suitable internal lubricants are those designated LOXIOL G-40, G-30, HOB-7140 and HOB-7121. Other suitable external lubricants are those deisgnated HOB-7107, G-70, and G-71S, all available from the Henkel Group. Although any combination of these internal and external lubricants appears to be suitable for purposes of the composition of this invention, slightly greater synergism was observed when using a lubricant system comprising the aforementioned LOXIOL G-16 and G-71 lubricants.

The composition of the insulation also includes other constituents to provide the composition with additional properties. Included is a plasticizer in the range of about 20 to 75 PHR. In the preferred embodiment are included 30 PHR of di-isodecyl phthalate (DIDP).

The insulation composition of this invention also includes constituents which provide flame and smoke suppression. A smoke suppressant is included in the range of about 0.5 to 10 PHR. In the preferred embodiment, 1 PHR of Ongard 2 smoke suppressant, which is marketed by Anzon, Inc., is included. Also, the insulation composition includes a flame retardant system constituent in the range of about 0.5 to 50 PHR with 1 PHR of antimony trioxide being present in the preferred embodiment.

Example compositions of insulation of this invention are disclosed in TABLE II as examples 1 to 4.

6

## TABLE II

### Example
### (PHR)

| Constituent | Insulation Grade | | | | | Jacket Grade | | | | | | |
|---|---|---|---|---|---|---|---|---|---|---|---|---|
| | Prior Art | No. 1 | No. 2 | No. 3 | No. 4 | No. 5 | No. 6 | No. 7 | No. 8 | No. 9 | No. 10 | No. 11 |
| Resin | 100 | 100 | 100 | 100 | 100 | 100 | 100 | 100 | 100 | 100 | 100 | 100 |
| Plasticizer DIDP | 30 | 30 | 30 | 30 | 30 | | | | | | | |
| Plasticizer Palatinol 711 | | | | | | 40 | 40 | 40 | 40 | 40 | 40 | 40 |
| Flame Retardant Antimony Trioxide | 1 | 1 | 1 | 1 | 1 | 3 | 3 | 3 | 3 | 3 | 3 | 3 |
| Smoke Suppresant Ongard 2 | 1 | 1 | 1 | 1 | 1 | | | | | | | |
| Stabilizer Tribase | 7 | | | | | | | | | | | |
| Lubricated Stabilizer Tribase XL | | | | | | 5 | | | | | | |
| Stabilizer Ferro 6164W | | | 1 | | 1 | | 1 | | 1 | 1 | 1 | |
| Stabilizer Stanclere T-186 | | 2 | 2 | 1.5 | 1.5 | | 2 | 2 | 1.5 | 1.5 | 1.5 | 1.5 |
| Flame Retardant Hydral 710 | | | | | | 15 | 15 | 15 | 15 | 15 | 30 | 30 |
| Lubricant Rosswax 140 | 0.4 | | | | | 0.5 | | | | | | |
| Internal Lubricant LOXIOL G-16 | | 1.5 | 1.5 | 1.5 | 2.5 | | 1.5 | 1.5 | 1.5 | 1.5 | 1.5 | 2.5 |
| External Lubricant LOXIOL G-71 | | 0.5 | 0.5 | 0.5 | 0.75 | | 0.5 | 0.5 | 0.5 | 0.5 | 0.5 | 0.75 |
| TOTAL PHR | 139.4 | 136 | 137 | 135.5 | 137.75 | 163.5 | 163 | 162 | 162.5 | 162.5 | 177.5 | 177.75 |

EP 0 506 286 A2

Referring now to TABLE III, there are shown electrical properties of conductors insulated with the presently used lead-stabilized insulation. Also shown in TABLE III are electrical properties for insulated conductors which include non-lead stabilized insulation, and more specifically, the organotin stabilized insulation described hereinbefore.

## TABLE III

## ELECTRICAL TESTS

| | | SEVEN CABLE SUMMARY WITH LEAD STABILIZATION SYSTEM | PVC WITH LEAD-FREE STABILIZATION SYSTEM |
|---|---|---|---|
| Resistance | Avg. | 27.3 | 27.4 |
| (Ohms/1000 ft) | Max. | 27.9 | 27.5 |
| Capacitance | Avg. | 17.7 | 19.1 |
| (pF/foot) | Max. | 19.8 | 20.0 |
| Attenuation (dB/1000 feet) | | | |
| 0.5 MHz | Avg. | 4.86 | 5.08 |
| | Max. | 5.20 | 5.24 |
| 1.0 MHz | Avg. | 7.00 | 7.38 |
| | Max. | 7.56 | 7.66 |
| 10.0 MHz | Avg. | 25.85 | 27.31 |
| | Max. | 27.92 | 28.29 |
| 16.0 MHz | Avg. | 35.69 | 36.44 |
| | Max. | 38.03 | 38.03 |
| Impedance (Ohms) | | | |
| 1.0 MHz | Min. | 94 | 90 |
| | Max. | 100 | 98 |
| 10.0 | Min. | 90 | 89 |
| | Max. | 97 | 97 |
| Crosstalk in dB at 1MHz | Worst | 41 | 48 |

The transmission media are disposed within a jacket 28. For the jacket of the cable of this invention, a plastic composition also is provided with a non-lead stabilizer. See examples 5 to 11 in TABLE II. As can be seen, the composition includes 100 PHR and a plasticizer in the amount of 40 PHR. In the preferred embodiment, the plasticizer is one designated Palatinol 711 and available from the BASF Company.

As in the insulation, the jacket composition also includes a flame retardant system. The preferred embodiment includes 3 PHR weight of antimony trioxide. Further included is a synergistic flame retardant in the range of about 5 to 50 PHR. In the preferred embodiment, 15 PHR of aluminum trihydrate such as HYDRAL 710 available from the Alcoa Company are included in the plastic composition of the jacket.

The jacket composition is stabilized with a non-lead stabilization system which includes am organotin constituent and a calcium-zinc constituent. The organotin constituent is included in the amount of about 1.5 to 2 parts by weight per 100 parts of PVC. In the preferred embodiment, Stanclere T-186 available from AKZO Chemical Company, is used as the organotin constituent. As will be recalled, Stanclere T-186 is a dibutyltin mercaptopropionate having the chemical formula $C_{11}SH_{22}O_2Sn$. For the sacrificial constituent, a calcium-zinc available under the description Ferro 6164W is included in the amount of about 1 PHR.

## Claims

1. A cable comprising at least one longitudinally extending transmission medium and a polyvinyl chloride based material which surrounds at least a portion of said longitudinally extending transmission medium, said polyvinyl chloride material being a composition comprising: a polyvinyl chloride resin, and said polyvinyl chloride material being characterised by a jacket which is comprised of a plastic material and which is disposed about said at least one transmission media,
   a stabilization system which comprises an organotin constituent and a sacrificial constituent; and
   a lubricant.

2. The cable of claim 1, wherein said organotin constituent is included in said composition in the amount of about 0.5 to 5 parts by weight per 100 parts by weight of said polyvinyl chloride resin.

3. The cable of claim 1, wherein said sacrifical constituent comprises calcium-zinc is included in said composition in the amount of about 0.2 to 10 parts by weight per 100 parts by weight of said polyvinyl chloride resin.

4. The cable of claim 1, wherein said composition also includes a lubricant system which includes oleic acid-based ester lubricants.

5. The cable of claim 4, wherein an internal lubricant constituent is included in said composition in the amount of about 0.5 to 5.0 parts by weight per 100 parts by weight of polyvinyl chloride and wherein an external lubricant constituent is included in said composition in the amount of about 0.25 to 2.5 parts by weight per 100 parts by weight of polyvinyl chloride.

6. The cable of claim 1, wherein said plastic material of said jacket is a composition comprising a polyvinyl chloride resin and a stabilization system which comprises an organotin constituent and a bimetallic sacrificial constituent.

7. The cable of claim 1, wherein said organotin constituent of the plastic material of said jacket is included in said composition in the amount of about 0.5 to 5 parts by weight per 100 parts by weight of said polyvinyl chloride resin and wherein said bemetallic sacrificial constituent said jacket composition comprises calcium-zinc, included in said composition of said jacket in the amount of about 0.2 to 10 parts by weight per 100 parts by weight of said polyvinyl chloride resin.

8. An insulated transmission medium, said insulated transmission medium comprising at least one longitudinally extending transmission medium; and
   a polyvinyl chloride based material which surrounds at least a portion of said longitudinally extending transmission medium, said polyvinyl chloride material being a composition comprising: a polyvinyl chloride resin and being characterized by
   a stabilization system which comprises an organotin constituent and a sacrificial constituent.

9. The insulated transmission medium of claim 8, wherein said organotin constituent is included in said composition in the amount of about 0.5 to 5 parts by weight per 100 parts by weight of said polyvinyl chloride resin and wherein said sacrificial constituent comprises a calcium-zinc constituent which is included in said composition in the amount of about 0.2 to 10 parts by weight per 100 parts by weight is said polyvinyl chloride resin.

10. The insulated transmission medium of claim 8, wherein said composition also includes a lubricant system comprising an external lubricant constituent which is included in said composition in the amount of about 0.25 to 2.5 parts by weight per 100 parts by weight of polyvinyl chloride and an internal lubricant constituent which is included in said composition in the amount of about 0.5 to 5.0 parts by weight per 100 parts by weight of polyvinyl chloride, an external lubricant constituent which is included in said composition in the amount of about 0.25 to 2.5 parts by weight per 100 parts by weight of polyvinyl chloride.

FIG 1

FIC 2